# EUROPÄISCHE PATENTSCHRIFT

(11) **EP 2 828 125 B1**
(45) Veröffentlichungstag und Bekanntmachung des Hinweises auf die Patenterteilung: **27.02.2019**
(21) Anmeldenummer: 13712220.6
(22) Anmeldetag: 22.03.2013
(51) Int. Cl.: B60Q 3/64, B60Q 3/267, B60N 3/02

(54) **ANORDNUNG ZUM BEREITSTELLEN EINER INNENRAUMBELEUCHTUNG EINES FAHRZEUGS UND VERFAHREN ZUM HERSTELLEN DERSELBEN**
ARRANGEMENT FOR PROVIDING INTERIOR ILLUMINATION FOR A VEHICLE, AND A METHOD FOR THE PRODUCTION OF SAME
SYSTÈME DESTINÉ À FOURNIR UN DISPOSITIF PERMETTANT D'ÉCLAIRER L'HABITABLE D'UN VÉHICULE ET PROCÉDÉ DESTINÉ À FABRIQUER UN TEL SYSTÈME

(30) Priorität: 23.03.2012 DE 102012005967
(43) Veröffentlichungstag der Anmeldung: 28.01.2015
(73) Patentinhaber: Volkswagen Aktiengesellschaft, 38440 Wolfsburg (DE)
(72) Erfinder: HEINZEL, Thorsten, 38442 Wolfsburg (DE); KOLLMANN, Christiof, 57250 Netphen (DE); PREOBRASCHENSKI, Alexej, 38442 Wolfsburg (DE); STUDENY, Christian, 38440 Wolfsburg (DE)
(86) Internationale Anmeldenummer: PCT/EP2013/056073
(87) Internationale Veröffentlichungsnummer: WO 2013/139963

(56) Entgegenhaltungen:
- EP-A1- 2 505 431
- DE-A1- 4 437 843
- DE-A1-102008 011 340
- DE-U1- 29 915 787
- US-A1- 2005 219 854

## Beschreibung

Die vorliegende Erfindung betrifft eine Anordnung zum Bereitstellen einer Innenraumbeleuchtung eines Fahrzeugs sowie ein dazugehöriges Verfahren zum Herstellen einer solchen Anordnung.
Innenraumbeleuchtungen eines Fahrzeugs haben mehrere Einsatzgebiete. Sie werden für die Beleuchtung von Bedienelementen und Ablagefächern benötigt, z.B. einem Handschuhfach oder einem seitlichen Türfach. Sie können lokal als Leseleuchte eingesetzt werden oder allgemein für eine behagliche Lichtinszenierung im Innenraum des Fahrzeugs verwendet werden. Dabei ist bei der Konzeption der Innenraumleuchten zu berücksichtigen, dass diese einerseits in dem teilweise knapp bemessenen Raum in der Innenverkleidung angeordnet werden müssen und andererseits die Fahrzeuginsassen, insbesondere den Fahrer des Fahrzeugs, nicht blenden dürfen. Es ist daher wichtig, trotz dieser Bauraumbeschränkungen die Innenraumbeleuchtung angemessen zu positionieren und die ausgesandte Lichtcharakteristik an die Gegebenheiten anzupassen.
Insbesondere besteht der Bedarf, die Innenseite der Fahrzeugtür beleuchten zu können, um z.B. den Zuziehgriff der Tür oder an der Tür angeordnete Bedienelemente besser sichtbar zu machen. Die DE 935 833 beschreibt beispielsweise eine Beleuchtungseinrichtung für den Innenraum von Fahrzeugen. Dabei ist in dem zum Teil aus einem durchsichtigen oder durchscheinenden Material bestehenden Zuziehgriff der Fahrzeugtür eine Lichtquelle, insbesondere eine Zweifadenlampe, untergebracht. Die Lichtquelle wird von einer im Hohlraum im Innern des Zuziehgriffs befestigten Halterung gehalten. Durch die Platzierung der Lichtquelle ist eine dezente Beleuchtung möglich, ohne den Fahrer zu blenden.
Die DE 100 64 099 A1 beschreibt eine Beleuchtungseinrichtung insbesondere für Kraftfahrzeuge. Dabei ist ein Leuchtmittel, insbesondere eine Leuchtdiode, in dem teilweise transparenten Türhebel integriert oder in der Innenverkleidung der Tür in der Nähe der Griffmulde des Türhebels angeordnet.
Die EP 1 759 923 A1 beschreibt ein Beleuchtungssystem für ein Fahrzeug, bei dem Beleuchtungsschaltkreise mit mehreren Beleuchtungseinheiten in einem Gehäuse und einer Abdeckung zu Lichtquellenmodulen integriert werden. Die Beleuchtungseinheiten umfassen jeweils wenigstens eine Leuchtdiode und ein Gehäuse. Mehrere Beleuchtungseinheiten sind durch elektrische Schaltungen miteinander verbunden. Diese Beleuchtungseinheiten werden in Fahrzeugstrukturen wie z.B. Öffnungen im Dach, der Innenverkleidung oder den Türen eingebettet.
Die DE 10 2008 011 340 A1 beschreibt eine Kraftfahrzeugkarosserie mit einer Einstiegsbeleuchtung, bei der eine Tür über einen an einem Scharnier befestigten Arm schwenkbar mit der Karosserie verbunden ist. An dem schwanenhalsartigen Arm ist eine Beleuchtungseinrichtung befestigt.
Aus der DE 44 37 843 A1 ist ein Haltestangensystem in einem Bus bekannt. Dabei wird eine Haltestange mit einer Handlaufstange über ein Verbindungselement starr miteinander verbunden.
Das Verbindungselement weist einen durch ein lichtdurchlässiges Abdeckelement abgedeckten Hohlraum auf, in dem eine Beleuchtungseinrichtung angeordnet ist.

Aus US 2005/0219854 A1 ist eine gattungsgemäße Anordnung zum Bereitstellen einer Innenraumbeleuchtung eines Fahrzeuges und dazu gehöriges Verfahren zum Herstellen einer solchen Anordnung bekannt. Es ist die Aufgabe der vorliegenden Erfindung, eine Anordnung zum Bereitstellen einer Innenraumbeleuchtung eines Fahrzeugs bereitzustellen, bei welcher die Ausnutzung des zur Verfügung stehenden Bauraums im Fahrzeug, insbesondere der Innenverkleidung des Fahrzeugs, verbessert wird. Außerdem soll ein kostengünstiges Herstellungsverfahren für die Anordnung angegeben werden.
Diese Aufgabe wird erfindungsgemäß durch eine Anordnung mit den Merkmalen des Anspruchs 1 sowie durch ein Herstellungsverfahren mit den Merkmalen des Anspruchs 6 gelöst. Vorteilhafte Aus- und Weiterbildungen ergeben sich aus den abhängigen Ansprüchen.
Die erfindungsgemäße Anordnung zum Bereitstellen einer Innenraumbeleuchtung eines Fahrzeugs umfasst zwei miteinander verbundene Fahrzeugteile, welche wenigstens je eine formstabile Trägerstruktur aufweisen, und ein zwischen den zwei Fahrzeugteilen angeordnetes Trägerelement, welches die zwei Fahrzeugteile, insbesondere die formstabilen Trägerstrukturen der Fahrzeugteile, starr miteinander verbindet und in welchem einstückig ein Gehäuse ausgebildet ist. Ein Leuchtenmodul zum Beleuchten des Innenraums des Fahrzeugs ist in dem einstückig im Trägerelement ausgebildeten Gehäuse befestigt. Dies erlaubt eine platzsparende Montage ohne zusätzliches Gehäuse. Das Gehäuse ist in dem Trägerelement, welches zwischen den beiden Fahrzeugteilen als Verbindung dient, integriert. Das Trägerelement weist dazu eine hohe Festigkeit auf, wodurch der Verbindungsstelle eine hohe mechanische Stabilität verliehen wird. Durch die Reduktion der Zahl der Einzelteile werden Qualitätsprobleme durch Fertigungstoleranzen und damit ggf. verbundene Geräuschentwicklung, z.B. durch Klappern, reduziert.
Die erfindungsgemäße Anordnung erlaubt es zudem, ein Leuchtenmodul in der Nähe oder sogar an der Verbindungsstelle zwischen zwei Fahrzeugteilen anzuordnen. Hierdurch wird Designfreiheit gewonnen und eine relativ hohe Lichtausbeute ermöglicht, wenn dadurch die Lichtquelle näher am gewünschten Lichtaustrittsort positioniert werden kann.
Die erfindungsgemäße Anordnung ist besonders vorteilhaft, wenn wenigstens eine der Trägerstrukturen der zwei Fahrzeugteile mit einer nicht-formstabilen Verkleidung abgedeckt ist, z.B. mit einem weichen, geschmeidigen Bezug wie etwa einem Leder- oder Stoffbezug überzogen ist. Eine problemlose Anordnung eines Leuchtenmoduls direkt an einem der Fahrzeugteile ist dann nicht immer möglich. Sind beispielsweise beide zu verbindenden Fahrzeugteile entsprechend bezogen, so käme erschwerend hinzu, dass das Leuchtenmodul mit der Bindenaht des Bezugs, also der Stelle an dem die Bezüge der beiden Fahrzeugteile aneinander genäht werden, in Konflikt kommt. Dies hätte nicht nur ggf. ästhetische Nachteile, sondern würde auch die mechanische Stabilität herabsetzen und wäre schwerer zu verarbeiten.
Das Trägerelement ist vorzugsweise an die Konturen der zu verbindenden Fahrzeugteile angepasst. Erfindungsgemäß ist das Trägerelement ringförmig. Es greift erfindungsgemäß beidseitig in jeweils eines der Fahrzeugteile ein und verbindet sie dadurch starr miteinander. Im Trägerelement und der formstabilen Trägerstruktur der Fahrzeugteile sind z.B. geeignete Hervortretungen und Aussparungen vorgesehen, die ineinander eingreifen. Ferner bevorzugt weist das Trägerelement jeweils zu den Fahrzeugteilen ausgerichtete und/oder in ihrer Anordnung auf die Fahrzeugteile abgestimmte Befestigungsmittel auf. Des Weiteren bevorzugt weist das Trägerelement je Fahrzeugteil mindestens einen aus dem Trägerelement ausgeformten Vorsprung auf, welcher jeweils als Befestigungsmittel zur festen Verbindung zwischen dem jeweiligen Fahrzeugteil und dem Trägerelement fungiert. In einer bevorzugten Weiterentwicklung dieser Ausführungsform weisen die ausgeformten Vorsprünge jeweils eine Aussparung auf, in welche je ausgeformten Vorsprung jeweils ein an einem der Fahrzeugteile befestigter Bolzen zur starren Fixierung des jeweiligen Fahrzeugteils an dem Trägerelement formschlüssig einführbar und mit dem Vorsprung verbindbar ist. Alternativ oder auch zusätzlich ist das Trägerelement mit weiteren aus dem Stand der Technik bekannten Verbindungstechniken mit den Fahrzeugteilen verbindbar.

In einer vorteilhaften Ausgestaltung der Erfindung weist das Trägerelement zusätzlich die Funktion eines Zierelements auf, welches die einander zugewandten Endbereiche der zwei Fahrzeugteile zumindest aus einem Betrachtungswinkelbereich aus dem Innenraum des Fahrzeugs verdeckt. Das Trägerelement wird somit nicht mehr als ggf. ästhetisch nachteilhaftes, funktionales Bauteil wahrgenommen, sondern verbessert im Gegenteil die ästhetische Wirkung an der Verbindungsstelle der zwei Fahrzeugteile. Die Randbereiche des Bezugs und der Nähte können durch den Rand des Trägerelements kaschiert werden.

Ein Zierelement zwischen zwei Fahrzeugteilen, welches für ein bereits bestehendes Innenraum-Design entworfen wurde, kann in einfacher Weise modifiziert werden, indem das Gehäuse für das Leuchtenmodul einstückig in der Struktur des Zierelements mit vorgesehen wird. Gegebenenfalls ist die Stabilität des Zierelements anzupassen, falls dieses nicht ohnehin schon eine stabilisierende Funktion hatte.

Das Leuchtenmodul wird typischerweise z.B. mittels Clipsen oder Stecken in dem Gehäuse befestigt. Es ist an der außenliegenden Stirnseite gemäß einer Ausführungsform bereits an die Außenkonturen des Trägerelements und der Verbindungsgeometrie der beiden Fahrzeugteile angepasst.

Gemäß einer weiteren Ausführungsform ist vorgesehen, dass das einstückig mit dem Trägerelement ausgebildete Gehäuse mit dem aufgenommenen Leuchtenmodul mit einem lichtleitenden Deckel abgedeckt ist, welcher das von dem Leuchtenmodul emittierte Licht in einen definierten Winkelbereich abstrahlt. Dies hat den Vorteil, dass nur das Leuchtenmodul und das Gehäuse aneinander angepasst sein müssen. Durch einen lichtleitenden Deckel können Gehäuse, Leuchtenmodul und die Innenseite des Trägerelements formschön abgedeckt werden. Der lichtleitende Deckel kann darüber hinaus die Lichtaustrittsfläche an die gewünschte Position umlenken und für die erforderliche Abstrahlcharakteristik sorgen. Das austretende Licht kann zudem durch den Deckel gestreut werden.

Der Deckel ist gemäß einer Ausführungsform wenigstens teilweise mit einer lichtstreuenden oder lichtbrechenden Struktur versehen. Er ist z.B. milchig oder opak und/oder es sind an der Innenseite des Deckels Prismen zur Lichtstreuung vorgesehen. Hierdurch kann vermieden werden, dass die Lichtquelle des Leuchtenmoduls direkt sichtbar ist, welches ästhetisch vorteilhaft ist und zudem ggf. eine Blendung vermeidet.
Vorteilhafterweise lässt sich die erfindungsgemäße Anordnung anwenden, wenn die zwei Fahrzeugteile eine Fahrzeugtür und ein dazugehöriger Zuziehgriff sind. Bei diesem Fahrzeugteile-Paar ergeben sich alle genannten Voraussetzungen, d.h. insbesondere das Bedürfnis einer dort angeordneten Innenraumbeleuchtung und die nötige mechanische Stabilität bei der Verbindung. Das Licht des Leuchtenmoduls wird beispielsweise auf ein Staufach in der Tür oder die Armablage und dort angeordnete Bedienelemente, z.B. für Türöffner, Fensterheber oder zum Einstellen der Außenspiegel, gerichtet.
Alternativ kann die erfindungsgemäße Anordnung auch für andere zu verbindende Fahrzeugteile im Innenraum des Fahrzeugs verwendet werden, z.B. im Bereich des Armaturenbretts oder der Sitze des Fahrzeugs.
Bei dem erfindungsgemäßen Verfahren zum Herstellen einer Anordnung zum Bereitstellen einer Innenraumbeleuchtung eines Fahrzeugs wird ein Trägerelement einstückig mit einem Gehäuse für ein Leuchtenmodul hergestellt und das Leuchtenmodul wird in dem Gehäuse befestigt. Optional wird das Gehäuse mit dem Leuchtenmodul mit einem lichtleitenden Deckel abgedeckt. Das Trägerelement, welches das Leuchtenmodul umfasst, wird dann an einem ersten Fahrzeugteil befestigt und der mit dem Trägerelement ausgestattete Endbereich des ersten Fahrzeugteils wird dann an dem Endbereich eines zweiten Fahrzeugteils befestigt. Durch die einstückige Herstellung des Trägerelements mit dem Gehäuse wird ein Herstellungsschritt gespart. Die nachfolgende Montage wird hierdurch vereinfacht.

Das Trägerelement wird erfindungsgemäß mit dem Gehäuse durch ein Kunststoff-Spritzgussverfahren hergestellt und ringförmig ausgebildet. Dies ist nicht nur kostengünstig, sondern ermöglicht auch eine flexible Anpassung des Trägerelements und des Gehäuses, falls für Designvarianten oder andere Modellreihen modifizierte Trägerelemente und/oder unterschiedliche Leuchtenmodule verwendet werden.

Im erfindunggemäßen Verfahren wird das Trägerelement vor dem Befestigen des Leuchtenmoduls in dem Gehäuse mit einer Zierschicht beschichtet. Das Trägerelement wird vorzugsweise verchromt und kann somit zusätzlich als kostengünstiges Zierelement dienen.

Die Erfindung wird nun anhand eines Ausführungsbeispiels mit Bezug zu den Figuren näher erläutert.
- Figur 1: zeigt ein Fahrzeug mit einer erfindungsgemäßen Anordnung zum Bereitstellen einer Innenraumbeleuchtung,
- Figur 2: zeigt eine perspektivische Ansicht einer Chromringblende mit einstückig ausgebildetem Gehäuse für ein Leuchtenmodul und als Verbindungsteil zwischen einer Tür und dem Zuziehgriff des Fahrzeugs gemäß einem Ausführungsbeispiel der erfindungsgemäßen Anordnung zum Bereitstellen einer Innenraumbeleuchtung,
- Figur 3: zeigt die Chromringblende gemäß der Figur 2 aus einer anderen Perspektive,
- Figur 4: zeigt ein Leuchtenmodul zur Aufnahme in das in der Chromringblende ausgebildete Gehäuse gemäß den Figuren 2 und 3 und gemäß dem Ausführungsbeispiel der Erfindung,
- Figur 5: zeigt die Anordnung zum Bereitstellen einer Innenraumbeleuchtung in einem Fahrzeug gemäß dem Ausführungsbeispiel der Erfindung,
- Figur 6: zeigt einen Detailausschnitt von der Umgebung der Chromringblende gemäß der Figur 5 und
- Figur 7: zeigt ein Ablaufdiagramm zum Herstellen der Anordnung zum Bereitstellen einer Innenraumbeleuchtung gemäß dem Ausführungsbeispiel der Erfindung.

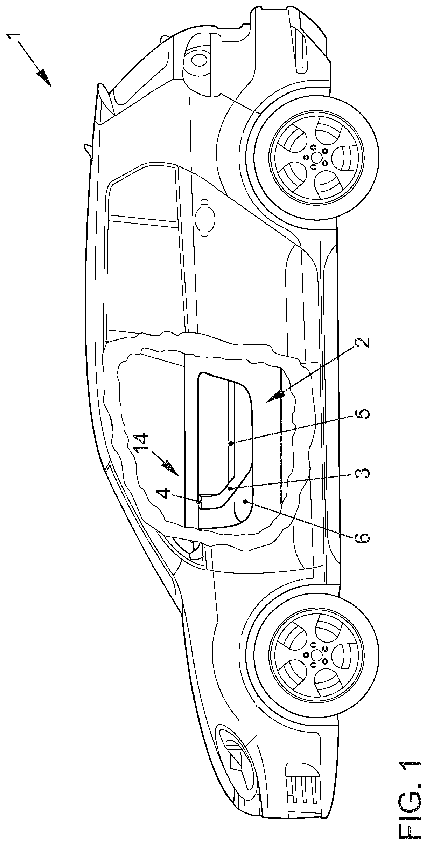

In der Figur 1 ist ein Fahrzeug 1 mit einer erfindungsgemäßen Anordnung 14 zum Bereitstellen einer Innenraumbeleuchtung gemäß dem Ausführungsbeispiel der Erfindung dargestellt. Die zwei zu verbindenden Fahrzeugteile sind in diesem Fall eine Tür 2 und ein dazugehöriger Zuziehgriff 3. Die Erfindung kann ebenso für andere im Fahrzeuginnern zu verbindende Fahrzeugteile angewendet werden, z.B. im Bereich des Armaturenbretts oder der Fahrzeugsitze.

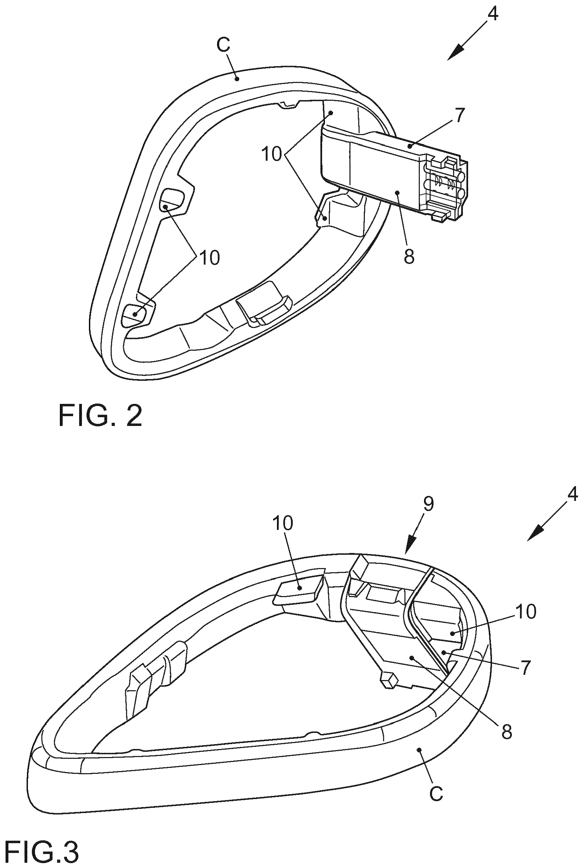

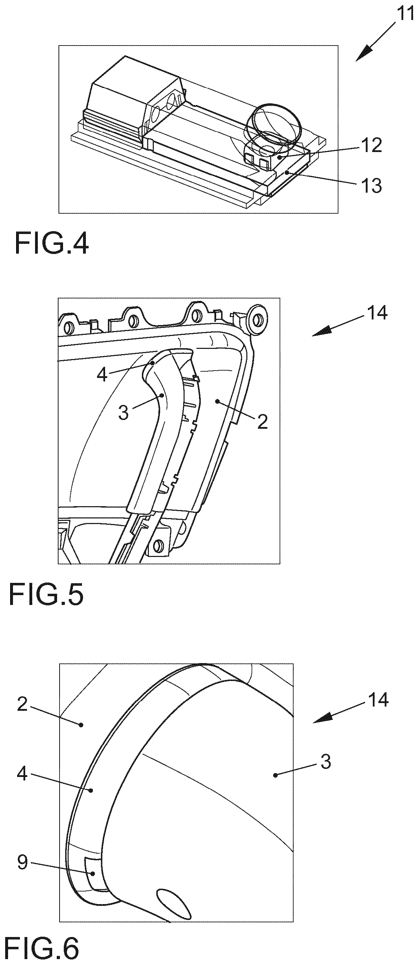

Zwischen dem oberen Ende des Zuziehgriffs 3 und dem Ansatzpunkt für den Zuziehgriff 3 in der Tür 2 ist eine Chromringblende 4 angeordnet. Die Chromringblende 4 hat dabei neben der Funktion als Zierelement, in der sie das obere Ende des Zuziehgriffs 3 und den Ansatzpunkt in der Tür 2 vollständig überdeckt, noch die weitere Funktion, als Trägerelement für ein Leuchtenmodul 11 (siehe Figur 4) zu dienen, wie dies weiter unten mit Bezug zu den Figuren 2 bis 4 noch beschrieben wird. Auf diese Weise wird eine Beleuchtung für die Armablage 5 oder das Staufach 6 in der Tür 2 bereitgestellt.

In den Figuren 2 und 3 sind je eine perspektivische Ansicht der Chromringblende 4 dargestellt. In der Chromringblende 4 ist einstückig ein Gehäuse 7 zur Aufnahme eines Leuchtenmoduls 11 ausgebildet. Das Gehäuse 7 ist mit einem lichtleitenden Deckel 8 verschließbar, der z.B. in das Gehäuse 7 eingeclipst oder eingerastet werden kann.

Der lichtleitende Deckel 8 ist aus opakem Weißglas, sogenanntem Milchglas, und führt das Licht, das von dem im Gehäuse 7 befestigten Leuchtenmodul 11 ausgesandt wird, zu einer Lichtaustrittsfläche 9 an der Stirnseite der Chromringblende 4. Die Innenseite der Lichtaustrittsfläche 9 ist optional mit einer prismatischen Oberflächenstruktur versehen (nicht dargestellt), sodass ein zusätzlich streuender Effekt des austretenden Lichts erzielt wird. Die Lichtaustrittsfläche 9 ist so geformt und relativ zur Chromringblende 4 ausgerichtet, dass das ausgesandte Licht bei Anordnung der Chromringblende 4 zwischen der Tür 2 und dem Zuziehgriff 3 in den gewünschten Winkelbereich im Fahrzeuginnern abgestrahlt wird.

Die Chromringblende 4 fungiert als Verbindungsteil zwischen der Tür 2 und dem Zuziehgriff 3. Dazu sind in der Chromringblende 4 verschiedene Rastmittel 10, z.B. Einkerbungen und Rastnasen, vorgesehen, die in geeignete Gegenrastmittel (nicht dargestellt) im oberen Ende des Zuziehgriffs 3 und dem Ansatzpunkt in der Tür 4 eingreifen und beide Fahrzeugteile somit starr miteinander verbinden. Die Tür 2 und der Zuziehgriff 3 bestehen aus je einem formstabilen Unterbau als Trägerstruktur, die jeweils mit einem Leder- oder Polsterbezug überzogen sind. Die Randbereiche des Leder- oder Polsterbezugs werden dabei im Grenzbereich zu der Chromringblende 4 von dieser überdeckt.

Um die mechanische Stabilität im Verbindungspunkt zwischen Tür 2 und Zuziehgriff 3 zu gewährleisten, besteht die Chromringblende 4 aus einem Spritzgussteil aus einem harten, formstabilen Kunststoff, z.B. einem Polycarbonat. Zur verbesserten ästhetischen Wirkung ist die Chromringblende 4 vollständig mit einer Chromschicht C überzogen.

In der Figur 4 ist exemplarisch das Leuchtenmodul 11 dargestellt. Es kann sich um ein aus dem Stand der Technik bekanntes Leuchtenmodul handeln. Es umfasst im gezeigten Beispiel eine Leuchtdiode 12, die auf einer Platine 13 gehalten wird. Auf der Platine 13 sind weitere Funktionseinheiten des Leuchtenmoduls 11 anordenbar, z.B. ein Mikroprozessor und elektrische Zuleitungen. Das Leuchtenmodul 11 und das Gehäuse 7 sind so aufeinander abgestimmt, dass das Leuchtenmodul 11 in dem Gehäuse 7 in einfacher Weise befestigt und wieder gelöst werden kann. Das Leuchtenmodul 11 wird z.B. in das Gehäuse 7 eingeclipst oder in eine Schiene eingeführt und das Gehäuse 7 wird dann anschließend mit dem Deckel 8 verschlossen.

In den Figuren 5 und 6 ist die komplette Anordnung 14 zum Bereitstellen einer Innenraumbeleuchtung gemäß dem Ausführungsbeispiel der Erfindung dargestellt. Sie umfasst den mit der Tür 2 verbundenen Zuziehgriff 3, zwischen denen die Chromringblende 4 angeordnet ist, die - wie oben beschrieben - die zwei Fahrzeugteile starr miteinander verbindet. In dem einstückig mit der Chromringblende 4 ausgebildeten Gehäuse 7 ist das Leuchtenmodul 11 zum Beleuchten des Innenraums befestigt (nicht dargestellt).

Die Figur 6 zeigt einen Detailausschnitt der Figur 5 in der Umgebung der Chromringblende 4. In montiertem Zustand ist die Lichtaustrittsfläche 9 seitlich am oberen Ansatzpunkt der umfänglichen Außenseite des Zuziehgriffs 3 positioniert. Sie ist so ausgerichtet, dass die darunterliegende Armablage 5 (nicht dargestellt) beleuchtet werden kann.

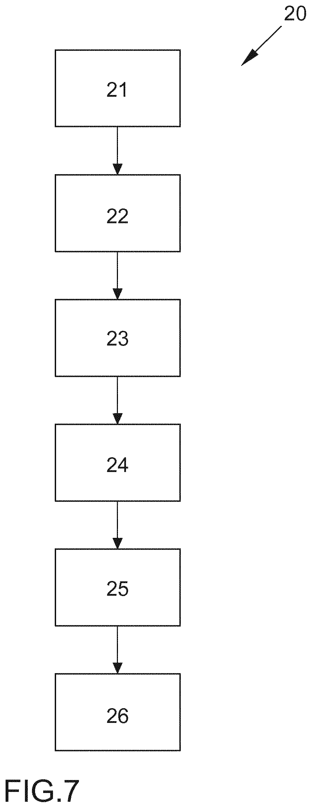

Die Herstellung der Anordnung 14 zum Bereitstellen einer Innenraumbeleuchtung des Fahrzeugs 1, wie diese mit Bezug zu den Figuren 2 - 6 beschrieben wurde, wird gemäß dem Ablaufdiagramm 20 in der Figur 7 durchgeführt.

Im Verfahrensschritt 21 wird durch Kunststoff-Spritzgießen ein Ringelement einstückig mit einem Gehäuse 7 hergestellt und im Verfahrensschritt 22 zum Verchromen in ein Chrombad getaucht. Hierdurch wird die Chromringblende 4 erhalten.

Im Verfahrensschritt 23 wird ein Leuchtenmodul 11 in das Gehäuse eingeclipst oder eingeschoben. Das Gehäuse 7 wird im Verfahrensschritt 24 durch einen lichtleitenden Deckel 24 verschlossen.

Die Chromringblende 4 wird im Verfahrensschritt 25 mit dem Zuziehgriff 3 verbunden, indem die Rastmittel 10 an der entsprechenden Seite der Chromringblende 4 in entsprechende Gegenrastmittel im Zuziehgriff 3 eingreifen. Der so zusammengebaute Zuziehgriff 3 wird mit dem Ende, an dem die Chromringblende 4 befestigt wurde, zum Ansatzpunkt in der Tür 2 geführt. Dazu werden zunächst die Zuleitungen des Leuchtenmoduls 11, die aus dem Gehäuse 7 wegführen, mit den Zuleitungen in der Tür 2 verbunden. Die freie Seite der Chromringblende 4 wird dann mit dem Ansatzpunkt in der Tür 2 verbunden, indem wiederum die Rastmittel 10 an der entsprechenden Seite der Chromringblende 4 in entsprechende Gegenrastmittel in der Tür 2 eingreifen. Dabei wird das Gehäuse 7 teilweise in einen Hohlraum in der Tür 2 eingeführt. Die Befestigung der Chromringblende 4 am Zuziehgriff 3 und an der Tür 2 kann durch weitere, an sich bekannte Verbindungsmaßnahmen, z.B. Kleben, unterstützt werden. Mit anderen Worten ausgedrückt weist das Trägerelement 4 in diesem Ausführungsbeispiel rein beispielhaft je Fahrzeugteil 2, 3, mit welchem das Trägerelement 4 starr, das heißt formstabil verbunden wird, zwei Befestigungsmittel 10 auf, über welche die starre Fixierung beziehungsweise Verbindung der beiden Fahrzeugteile 2, 3 über das Trägerelement 4 miteinander erfolgt. In diesem Ausführungsbeispiel weist das Trägerelement 4 rein beispielhaft zwei innenseitig an dem dem ersten Fahrzeugteil 2 zugewandten Rand des Trägerelementes 4 angeordnete Befestigungsmittel 10 auf. Ferner weist das Trägerelement 4 rein beispielhaft zwei ebenfalls innenseitig jedoch an dem dem zweiten Fahrzeugteil 3 zugewandten Rand des Trägerelementes 4 angeordnete Befestigungsmittel 10 auf. Die auf dem dem zweiten Fahrzeugteil 2 zugewandten Rand des Trägerelementes 4 angeordneten Befestigungsmittel 10 sind in diesem Ausführungsbeispiel rein beispielhaft als Vorsprünge ausgeführt, welche jeweils eine Aussparung beziehungsweise eine Öffnung aufweisen, in welche jeweils ein an dem zweiten Fahrzeugteil 3 befestigtes Gegenelement, welches in diesen Ausführungsbeispiel rein beispielhaft als Bolzen ausgeführt ist, formschlüssig einführbar ist. Die beiden an dem dem ersten Fahrzeugteil 2 zugewandten Rand des Trägerelementes 4 angeordneten Befestigungsmittel 10 sind in diesem Ausführungsbeispiel rein beispielhaft als angewinkelte Vorsprünge beziehungsweise Nasen ausgeführt, welche jeweils formschlüssig in jeweils eine von dem ersten Fahrzeugteil 2 aufgewiesene Nut formschlüssig einführbar sind. Über diese Befestigungsmittel 10 können die Farzeugteile 2, 3 starr beziehungsweise fest über das Trägerelement 4 miteinander verbunden werden.

Es können allerdings auch erfindungsgemäße Anordnungen 14 mit Trägerelementen 4 ausgeführt sein, welche mehr oder weniger als zwei Befestigungsmittel je Fahrzeugteil 2, 3 aufweisen. Ferner können auch erfindungsgemäße Anordnungen 14 mit Trägerelementen 4 ausgeführt sein, welche andere als die oben beschriebenen Befestigungsmittel 10 aufweisen.

### Bezugszeichenliste

- 1: Fahrzeug
- 2: Tür
- 3: Zuziehgriff
- 4: Chromringblende
- 5: Armablage
- 6: Staufach
- 7: Gehäuse
- 8: lichtleitender Deckel
- 9: Lichtaustrittsfläche
- 10: Rastmittel
- 11: Leuchtenmodul
- 12: Leuchtdiode
- 13: Platine
- 14: Anordnung zum Bereitstellen einer Innenbeleuchtung
- 20: Ablaufdiagramm zum Herstellen der erfindungsgemäßen Anordnung
- 21: Spritzgießen eines einstückigen Ringelements mit Gehäuse
- 22: Verchromen
- 23: Einsetzen des Leuchtenmoduls
- 24: Verschließen mit Deckel
- 25: Verbinden der Chromringblende mit dem Zuziehgriff
- 26: Einsetzen des Zuziehgriffs an die Tür
- C: Chromschicht

## Patentansprüche

1. Anordnung (14) zum Bereitstellen einer Innenraumbeleuchtung eines Fahrzeugs (1), umfassend
- zwei miteinander verbundene Fahrzeugteile (2, 3), welche wenigstens je eine formstabile Trägerstruktur aufweisen,
- ein zwischen den zwei Fahrzeugteilen (2, 3) angeordnetes Trägerelement (4), in welchem einstückig ein Gehäuse (7) ausgebildet ist, und
- ein Leuchtenmodul (11) zum Beleuchten des Innenraums des Fahrzeugs (1), welches in dem einstückig im Trägerelement (4) ausgebildeten Gehäuse (7) befestigt ist, **dadurch gekennzeichnet, dass** das Trägerelement (4) beidseitig in jeweils eines der Fahrzeugteile (2,3) eingreift und, dass das Trägerelement (4) ringförmig ist, wobei das Trägerelement (4) zusätzlich die Funktion eines Zierelementes aufweist, welches die einander zugewandten Endbereiche der zwei Fahrzeugteile (2, 3) zumindest aus einem Betrachtungswinkelbereich aus dem Innenraum des Fahrzeugs (1) verdeckt.

2. Anordnung (14) nach Anspruch 1,
**dadurch gekennzeichnet,**
**dass** wenigstens eine der Trägerstrukturen der zwei Fahrzeugteile (2, 3) mit einer nicht-formstabilen Verkleidung abgedeckt ist.

3. Anordnung (14) nach einem der vorangegangenen Ansprüche,
**dadurch gekennzeichnet,**
**dass** das einstückig mit dem Trägerelement (4) ausgebildete Gehäuse (7) mit dem aufgenommenen Leuchtenmodul (11) mit einem lichtleitenden Deckel (8) abgedeckt ist, welcher das von dem Leuchtenmodul (11) emittierte Licht in einen definierten Winkelbereich abstrahlt.

4. Anordnung (14) nach einem der vorangegangenen Ansprüche,
**dadurch gekennzeichnet,**
**dass** der Deckel (8) wenigstens teilweise mit einer lichtstreuenden oder lichtbrechenden Struktur versehen ist.

5. Anordnung (14) nach einem der vorangegangenen Ansprüche,
**dadurch gekennzeichnet,**
**dass** die zwei Fahrzeugteile (2, 3) eine Fahrzeugtür (2) und ein dazugehöriger Zuziehgriff (3) sind.

6. Verfahren zum Herstellen einer Anordnung (14) zum Bereitstellen einer Innenraumbeleuchtung eines Fahrzeugs (1), bei dem
- ein Trägerelement (4) einstückig mit einem Gehäuse (7) für ein Leuchtenmodul (11) durch ein Kunststoff-Spritzgussverfahren hergestellt wird, und ringförmig ausgebildet ist,
- das Leuchtenmodul (11) in dem Gehäuse (7) befestigt wird und optional mit einem lichtleitenden Deckel (8) abgedeckt wird,
- das Trägerelement (4), welches das Leuchtenmodul (11) umfasst, an einem ersten Fahrzeugteil (3) befestigt wird und
- der mit dem Trägerelement (4) ausgestattete Endbereich des ersten Fahrzeugteils (3) an einem Endbereich eines zweiten Fahrzeugteils (2) befestigt wird, wobei die Fahrzeugteile (2,3) wenigstens je eine formstabile Trägerstruktur aufweisen, von denen wenigstens eine mit einer nicht-formstabilen Verkleidung abgedeckt ist, deren Randbereiche durch den Rand des Trägerelementes (4) kaschiert werden und wobei
- das Trägerelement (4) vor dem Befestigen des Leuchtenmoduls (11) in dem Gehäuse (7) mit einer Zierschicht (C) beschichtet wird, vorzugsweise verchromt wird.

## Claims

1. Arrangement (14) for providing an interior lighting of a vehicle (1), comprising
- two interconnected vehicle parts (2, 3) which each have at least one dimensionally stable carrier structure,
- a carrier element (4) which is arranged between the two vehicle parts (2, 3) and in which a housing (7) is integrally formed, and
- a light module (11) for illuminating the interior of the vehicle (1), which module (11) is fastened in the housing (7) integrally formed in the carrier element (4),
**characterized in that** the carrier element (4) engages on both sides in in each case one of the vehicle parts (2, 3), and **in that** the carrier element (4) is annular, wherein the carrier element (4) additionally has the function of a decorative element which, at least from a viewing angle range from the interior of the vehicle (1), conceals the mutually facing end regions of the two vehicle parts (2, 3).

2. Arrangement (14) according to Claim 1,
**characterized**
**in that** at least one of the carrier structures of the two vehicle parts (2, 3) is covered with a non-dimensionally stable cladding.

3. Arrangement (14) according to one of the preceding claims,
**characterized**
**in that** the housing (7) formed integrally with the carrier element (4) and having the accommodated light module (11) is covered with a light-conducting cover (8) which radiates the light emitted by the light module (11) into a defined angle range.

4. Arrangement (14) according to one of the preceding claims,
**characterized**
**in that** the cover (8) is at least partially provided with a light-scattering or light-refracting structure.

5. Arrangement (14) according to one of the preceding claims,
**characterized**
**in that** the two vehicle parts (2, 3) are a vehicle door (2) and an associated pull-closed handle (3).

6. Method for producing an arrangement (14) for providing an interior lighting of a vehicle (1), in which
- a carrier element (4) is produced integrally with a housing (7) for a light module (11) by a plastic injection-moulding process, and is of annular design,
- the light module (11) is fastened in the housing (7) and is optionally covered with a light-conducting cover (8),
- the carrier element (4), which comprises the light module (11), is fastened to a first vehicle part (3), and
- the end region of the first vehicle part (3) that is equipped with the carrier element (4) is fastened to an end region of a second vehicle part (2), wherein the vehicle parts (2, 3) each have at least one dimensionally stable carrier structure, of which at least one is covered with a non-dimensionally stable cladding whose edge regions are concealed by the edge of the carrier element (4), and wherein
- before fastening the light module (11) in the housing (7), the carrier element (4) is coated, preferably chromed, with a decorative layer (C) .

## Revendications

1. Système (14) destiné à fournir un dispositif d'éclairage de l'habitacle d'un véhicule (1), comprenant
- deux parties de véhicule assemblées l'une à l'autre (2, 3), qui présentent chacune au moins une structure de support de forme stable,
- un élément de support (4) disposé entre les deux parties de véhicule (2, 3), dans lequel un boîtier (7) est formé d'une seule pièce, et
- un module d'éclairage (11) pour éclairer l'habitacle du véhicule (1), qui est fixé dans le boîtier (7) formé d'une seule pièce dans l'élément de support (4),
**caractérisé en ce que** l'élément de support (4) s'engage de part et d'autre respectivement dans une des parties de véhicule (2, 3), et **en ce que** l'élément de support (4) est de forme annulaire, dans lequel l'élément de support (4) présente en outre la fonction d'un élément décoratif, qui masque les régions d'extrémité tournées l'une vers l'autre des deux parties de véhicule (2, 3), au moins dans une plage angulaire de vision à partir de l'habitacle du véhicule (1).

2. Système (14) selon la revendication 1, **caractérisé en ce qu'**au moins une des structures de support des deux parties de véhicule (2, 3) est recouverte par un habillage de forme non stable.

3. Système (14) selon l'une quelconque des revendications précédentes, **caractérisé en ce que** le boîtier (7) réalisé d'une seule pièce avec l'élément de support (4) avec le module d'éclairage (11) incorporé est recouvert avec un couvercle translucide (8), qui diffuse dans une plage angulaire définie la lumière émise par le module d'éclairage (11).

4. Système (14) selon l'une quelconque des revendications précédentes, **caractérisé en ce que** le couvercle (8) est doté au moins en partie d'une structure dispersant la lumière ou diffractant la lumière.

5. Système (14) selon l'une quelconque des revendications précédentes, **caractérisé en ce que** les deux parties de véhicule (2, 3) sont une porte de véhicule (2) et une poignée de fermeture (3).

6. Procédé de fabrication d'un système (14) destiné à fournir un dispositif d'éclairage de l'habitacle d'un véhicule (1), dans lequel
- un élément de support (4) est fabriqué d'une seule pièce avec un boîtier (7) pour un module d'éclairage (11) par un procédé de moulage par injection de matière plastique et est réalisé sous forme annulaire,
- on fixe le module d'éclairage (11) dans le boîtier (7) et en option on le recouvre avec un couvercle translucide (8),
- on fixe l'élément de support (4), qui comprend le module d'éclairage (11), à une première partie de véhicule (3) et
- on fixe la région d'extrémité de la première partie de véhicule (3), munie de l'élément de support (4), à une région d'extrémité d'une seconde partie de véhicule (2), dans lequel les parties de véhicule (2, 3) présentent chacune au moins une structure de support de forme stable, dont au moins une est recouverte avec un habillage de forme non stable, dont les régions de bord sont dissimulées par le bord de l'élément de support (4), et dans lequel
- on revêt d'une couche décorative (C), de préférence on chrome, l'élément de support (4) avant la fixation du module d'éclairage (11) dans le boîtier (7).
